# EUROPEAN PATENT APPLICATION

(11) **EP 4 625 031 A1**
(43) Date of publication of application: **01.10.2025**
(21) Application number: 23892949.1
(22) Date of filing: 29.03.2023
(51) Int. Cl.: G02F 1/1339, G02F 1/1333

(54) **DIMMING DEVICE AND MANUFACTURING METHOD THEREFOR**

(30) Priority: 21.11.2022 CN 202211454453
(71) Applicant: Smart Liquid Crystal Technologies Co., Ltd., Suzhou, Jiangsu 215500 (CN)
(72) Inventor: ZHOU, Mengchao, Suzhou, Jiangsu 215500 (CN); WANG, Fei, Suzhou, Jiangsu 215500 (CN); LI, Yuting, Suzhou, Jiangsu 215500 (CN)
(74) Representative: Gille Hrabal Partnerschaftsgesellschaft mbB Patentanwälte
(86) International application number: PCT/CN2023/084826
(87) International publication number: WO 2024/108844

(57) **Abstract**

The present invention relates to a light modulation device comprising two transparent conductive substrates, a perimeter seal structure, a light modulation material, a support structure layer, and a fixed layer; the two transparent conductive substrates are arranged in parallel and opposing positions and, together with the perimeter seal structure sandwiched therebetween, forming an enclosed cavity; the light modulation material is disposed within the enclosed cavity; the support structure layer is embedded in the light modulation material and configured to maintain a uniform gap between the two transparent conductive substrates; the fixed layer is disposed on and covers an entire conductive surface of at least one transparent conductive substrate to immobilize the support structure layer. The invention further provides a preparation method for the light modulation device, which involves first forming the fixed layer and then forming the support structure layer. The preparation method and structural design of the present application prevent displacement or misalignment of the support structure layer when the light modulation device is subjected to external forces during post-processing or practical installation.

## Description

This application claims priority to the application filed on November 21, 2022, with application number CN202211454453.2 and titled " Lighting Modulation Device And Preparation Method Thereof " the entire contents of which are incorporated herein by reference

### TECHNICAL FIELD

The invention relates to the field of electro-optic device technology, specifically to a light modulation device and its preparation method.

### BACKGROUND

As a novel light modulation technology, light modulation devices can control light propagation through electrical, thermal, or pressure stimulation, enabling applications across various fields. Common light modulation technologies include PDLC (Polymer Dispersed Liquid Crystal), dye-doped liquid crystal, SPD (Suspended Particle Device), EC (Electrochromic), and bistable light modulation technologies. Based on the physical state of the light modulation layer, these devices can be categorized into solid, semi-solid, or liquid types. However, liquid-based light modulation devices, due to their fluid nature, are prone to deformation during use. To address this, internal support structures are often incorporated. Although light modulation devices differ significantly from liquid crystal displays (LCDs) in performance, their structure-comprising upper/lower substrates and an intermediate layer-is similar. Thus, support structures for liquid light modulation devices often borrow from LCD technologies, such as spacer fixation or PS (Photo Spacer) methods.

Regarding the Spacer Fixation Method: The disclosed patent WO2020093541A1 describes a fabrication method for flexible liquid crystal display devices. By incorporating adhesive spacer particles between the upper and lower substrates, this method prevents uneven cell gap issues caused by spacer displacement during bending or twisting, thereby enhancing the quality and lifespan of flexible displays. However, compared to the liquid crystal panel industry, light modulation devices undergo additional post-processing steps and face specific application scenarios. Post-processing includes lamination and hollow assembly processes, where light modulation devices are subjected to significant external compression, particularly during lamination. Common application scenarios include architectural windows, doors, and vehicle windows (e.g., cars, aircraft, high-speed trains), where wind pressure and mechanical stress during installation or use impose varying degrees of compression and impact. The adhesive spacer particles form point-contact bonds with the substrate layers, offering limited adhesion. If the spacer fixation method used in liquid crystal panels is directly applied to light modulation devices, the internal support structures often shift or misalign under high compression, compromising performance and longevity.

Regarding PS Technology: In liquid crystal displays (LCDs), the desired visual effects are achieved by controlling the electric field between the upper and lower substrates to alter the alignment of liquid crystal materials. The spacer materials between the substrates play a critical role in maintaining the thickness and uniformity of the gap. With technological advancements, PS (Photo Spacer) technology has replaced traditional spacer methods in TFT-LCD manufacturing. This involves using a photoreactive material, known as photoresist, which can be categorized into positive or negative photoresist depending on its reaction mechanism. The photoresist is directly coated onto ITO glass substrates through a photolithography process. Subsequent steps-exposure, development, and baking-enable precise control of the substrate gap thickness. However, this method involves complex fabrication processes, high equipment costs, and limitations in achieving larger gap heights, which restrict its broader application.

Thus, there is a need for a simple and effective support structure and preparation method tailored to liquid light modulation devices.

### SUMMARY

The present application primarily addresses technical challenges in the light modulation field, including insufficient adhesion of support structures provided by spacer fixation methods and PS (Photo Spacer) technologies, complex fabrication processes, and limitations in achieving devices with larger dimensional scales.

To achieve the above objective, the present application provides a light modulating device, which comprises two transparent conductive substrates parallel to each other, perimeter seal structure sandwiched between the two transparent conductive substrates to form an accommodating cavity enclosed with the two transparent conductive substrates, light modulating material filled in the cavity, a support structure layer embedded in the light modulating material to maintain a uniform gap between the two transparent conductive substrates, and fixed layer arranged on the conductive surface of at least one transparent conductive substrate and covers the entire conductive surface of the transparent conductive substrate for fixing the support structure layer.

In a further improvement of the present application, the ratio of the height of the support structure layer to the thickness of the fixed layer is 2:1 to 500,000:1.

In a further improvement of the present application, the fixed layer has a thickness of 0.1 nm to 20 µm.

In a further improvement of the present application, the support structure layer has a height of 1 µm to 500 µm.

In a further improvement of the present application, the support structure layer is composed of spacers, wherein the spacers exhibit at least one shape selected from spherical, rod-like, elliptical, or flake-shaped.

In a further improvement of the present application, the spacers are adhesive or non-adhesive type spacers.

In a further improvement, the spacers exhibit at least one color selected from transparent, semi-transparent, white, or black.

In a further improvement of the present application, the spacers are distributed at a density of 1 to 200 particles/mm².

In a further improvement of the present application, the light modulation device further comprises an alignment layer.

In a further improvement of the present application, the alignment layer is immediately adjacent to the fixed layer.

In a further improvement of the present application, the alignment layer is immediately adjacent to the conductive surface of the transparent conductive substrate.

In a further improvement of the present application, the alignment layer is immediately adjacent to the fixed layer and/or the conductive surface of the transparent conductive substrate.

To achieve the aforementioned objectives, the present application further provides a method for preparing the aforementioned light modulation device, comprising the following steps: S1. Preparation of Transparent Conductive Substrates: the conductive surface of the substrates is subjected to surface treatment, typically via plasma or corona methods, to remove organic residues and activate the surface, thereby facilitating subsequent coating processes; S2. Formation of Fixed Layer: a fixed layer solution is uniformly coated onto the conductive surface of the substrate obtained in S1. The coated substrate is pre-baked to yield a transparent conductive substrate with the fixed layer; S3. Formation of Support Structure Layer: spacers and a spray solvent are mixed in a predetermined ratio to form a homogeneous dispersion. The mixture is uniformly sprayed onto the fixed layer of the substrate from S2 using a spray-coating device. The substrate undergoes high-temperature curing to solidify the support structure layer; S4. Assembly of Cell Structure: two aligned transparent conductive substrates (at least one with the support structure layer from S3) are bonded using a sealing adhesive. The assembly is cured to form a sealed cell; S5. Integration of Light Modulation Material: the cell is filled with a light modulation material. The filled cell is cured and sealed to complete the light modulation device.

**In** a further improvement of the present application, the fixed layer solvent is selected from thermosetting adhesive, photocurable adhesive, or photo-thermosetting adhesive.

In a further improvement of the present application, the thermosetting adhesive is selected from silicone resins or epoxy resins, the photocurable adhesive is selected from acrylic resins, and the photo-thermosetting adhesive is a mixture of silicone resin and acrylic resin or epoxy resin and acrylic resin.

In a further improvement of the present application, the coating method is selected from any one of spin coating, dip coating, screen printing, spray coating, or slot die coating.

The present application achieves the following beneficial effects:
By independently preparing the fixed layer for securing the support structure layer, the present application provides superior adhesion, effectively preventing displacement or misalignment of the support structure layer during post-processing or installation under external forces.

The fixed layer significantly reduces the risk of electrical breakdown in the light modulation device, offering reliable insulation protection.

The support structure layer accommodates a wide range of heights, ensuring versatility across applications. The simplified fabrication process further enhances feasibility for industrial implementation.

### BRIEF DESCRIPTION OF DRAWINGS

FIG. 1 is a schematic structural diagram of the light modulation device according to Embodiment 1.
FIG. 2 is a schematic structural diagram of the light modulation device according to Embodiment 2.
FIG. 3 is a schematic structural diagram of the light modulation device according to Embodiment 3.
FIG. 4 is a schematic structural diagram of the light modulation device according to Embodiment 4.
FIG. 5 is a schematic structural diagram of the light modulation device according to Embodiment 5.
FIG. 6 is a schematic structural diagram of the light modulation device according to Embodiment 6.
FIG. 7 is a schematic structural diagram of the light modulation device according to Embodiment 7.
FIG. 8 shows microscopic images of post-processed light modulation devices: (a) prepared using the technical solution of Embodiment 1 of the present application, and (b) prepared using a conventional method.

In the drawings: 101: first transparent substrate; 201: first transparent conductive layer; 102: second transparent substrate; 202: second transparent conductive layer; 300: perimeter seal structure; 400: light modulation material; 501: first fixed layer; 502: second fixed layer; 600: support structure layer; 701: first alignment layer; 702: second alignment layer.

### DETAILED DESCRIPTION OF EMBODIMENTS

To ensure clarity of the objectives, technical solutions, and advantages of the present application, the technical solutions of the present application are described in detail below with reference to specific embodiments and accompanying drawings. It is to be understood that the described embodiments are merely a subset of the embodiments of the present application and are not exhaustive. These embodiments are not intended to limit the scope of the invention. All other embodiments derived by those skilled in the art based on the embodiments herein without creative effort shall fall within the protection scope of the present application.

The present application provides a light modulation device, comprising: two transparent conductive substrates, the two transparent conductive substrates arranged in parallel and opposing positions; a perimeter seal structure 300, the perimeter seal structure 300 sandwiched between the two transparent conductive substrates, so that the two transparent conductive substrates are enclosed with the perimeter seal structure 300 to form an enclosed cavity; a light modulation material 400, the light modulation material 400 disposed within the cavity; a support structure layer 600, the support structure layer 600 embedded in the light modulation material 400, to maintain an interval distance between the two transparent conductive substrates; a fixed layer ,the fixed layer disposed on at least one transparent conductive substrate, covering the entire conductive surface thereof, and configured to immobilize the support structure layer 600.

In a preferred embodiment, the ratio of the height of the support structure layer 600 to the thickness of the fixed layer is 2:1 to 500,000:1. The fixed layer has a thickness of 0.1 nm to 20 µm, and the height of the support structure layer 600 is 1 µm to 500 µm. The support structure layer 600 is composed of spacers, wherein the spacers exhibit at least one shape selected from spherical, rod-like, elliptical, or flake-shaped. The spacers may include, but are not limited to, colors such as transparent, semi-transparent, white, or black. The spacers are distributed at a density of 1 to 200 particles/mm² and may be adhesive or non-adhesive. The material of the spacers is selected from resins or inorganic materials, wherein the resin is preferably polystyrene and the inorganic material is preferably glass fiber or silicon dioxide.

In a preferred embodiment, the light modulation device further comprises an alignment layer. The alignment layer is positioned immediately adjacent to the fixed layer. Alternatively, the alignment layer is positioned immediately adjacent to the conductive surface of the transparent conductive substrate. In another configuration, the alignment layer is positioned immediately adjacent to the fixed layer and/or the conductive surface of the transparent conductive substrate.

Based on the same inventive concept, the present application further provides a method for preparing the light modulation device, comprising the following steps:
S1. preparing transparent conductive substrates by performing surface treatment on the conductive surface of the substrates, typically via plasma or corona methods, to remove organic residues and activate the surface, thereby facilitating coating application;
S2. forming a fixed layer by firstly uniformly coating a fixed layer solution onto the conductive surface of the substrate obtained in S1, followed by pre-baking to obtain a transparent conductive substrate with the fixed layer;
S3. forming a support structure layer 600 by firstly mixing spacers and a wet-spray solvent in a predetermined ratio to form a homogeneous dispersion, secondly uniformly spraying the mixture onto the fixed layer of the substrate from S2 using spray-coating equipment, and finally performing high-temperature curing to obtain a transparent conductive substrate with the support structure layer 600;
S4. assembling a cell by bonding two aligned transparent conductive substrates using a sealing adhesive, followed by curing to form the cell, wherein at least one of the two substrates is the transparent conductive substrate with the support structure layer 600 obtained in S3;
S5. filling the cell from S4 with a light modulation material 400, followed by curing and sealing to obtain the light modulation device.

In a preferred embodiment, the fixed layer solvent is a thermosetting adhesive, a photocurable adhesive, or a photo-thermosetting adhesive; the thermosetting adhesive is selected from silicone resins or epoxy resins, the photocurable adhesive is selected from acrylic resins, and the photo-thermosetting adhesive is a mixture of a silicone resin and an acrylic resin or a mixture of an epoxy resin and an acrylic resin.

The coating method is selected from spin coating, dip coating, screen printing, spray coating, or slot die coating.

For the light modulation device of the present application, embodiments of the present application provide detailed descriptions of several light modulation devices with specific structures.

### Embodiment 1

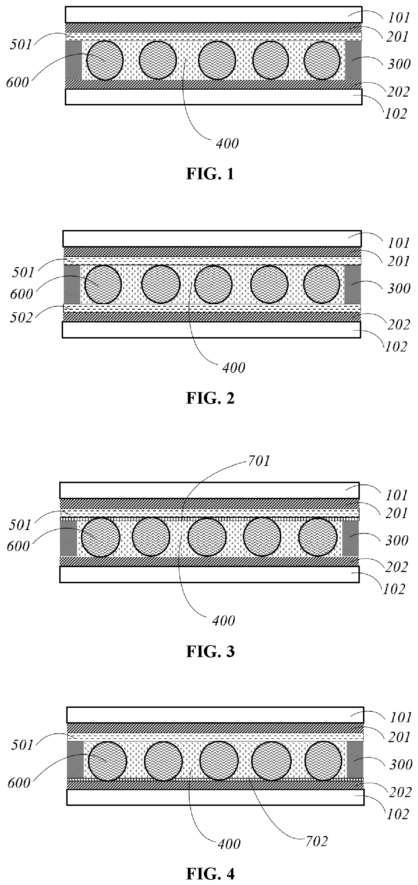

Referring to the structural schematic diagram in FIG. 1, the light modulation device of the embodiment of the present application comprises a first transparent conductive substrate and a second transparent conductive substrate arranged in parallel and opposing positions, a perimeter seal structure 300 sandwiched between the first transparent conductive substrate and the second transparent conductive substrate, a light modulation material 400, a first fixed layer 501, and a support structure layer 600. The first transparent conductive substrate, the second transparent conductive substrate, and the perimeter seal structure 300 collectively form an enclosed cavity; the first transparent conductive substrate comprises a first transparent substrate 101 and a first transparent conductive layer 201 stacked thereon, with the first transparent conductive layer 201 positioned adjacent to the cavity; the second transparent conductive substrate comprises a second transparent substrate 102 and a second transparent conductive layer 202 stacked thereon, with the second transparent conductive layer 202 positioned adjacent to the cavity; the first fixed layer 501 is disposed on the first transparent conductive layer 201 and covers the entire first transparent conductive layer 201 to immobilize the support structure layer 600; the light modulation material 400 is disposed within the cavity; the support structure layer 600 is embedded in the light modulation material 400 to maintain an interval distance between the first transparent conductive substrate and the second transparent conductive substrate. The first transparent substrate 101 and the second transparent substrate 102 in this embodiment serve to carry respective film layers and form a flat external protective structure for the light modulation device.

In a practicable embodiment, the material of the first transparent substrate 101 and/or the second transparent substrate 102 in this embodiment may include, but is not limited to, one or more transparent polymer materials such as glass, polyethylene terephthalate (PET), polyethylene naphthalate (PEN), polycarbonate (PC), polypropylene (PP), polymethyl methacrylate (PMMA), polybutylene terephthalate (PBT), polyvinyl chloride (PVC), polyimide (PI), and cellulose.

**In** a practicable embodiment, the first transparent conductive layer 201 and/or the second transparent conductive layer 202 in this embodiment may include, but are not limited to, indium tin oxide (ITO), carbon-based conductive films, metal nanowire conductive films, metal oxide films, and the like; wherein: the carbon-based conductive films may be prepared from materials such as graphene oxide or carbon nanotubes; the metal nanowire conductive films may be prepared from materials such as silver nanowires or copper nanowires; the metal oxide films may be prepared from materials such as indium tin oxide, indium oxide, tin oxide, zinc oxide, or mixed systems of other metal oxides; the first transparent conductive layer 201 and the second transparent conductive layer 202 are both designed as integral layer structures.

In a practicable embodiment, the light modulation material 400 in this embodiment may be a liquid crystal light modulation material, and the liquid crystal light modulation material may include, but is not limited to, a liquid crystal composition of cholesteric liquid crystals, a dye-doped liquid crystal composition, or other liquid crystal-based material.

In a practicable embodiment, the perimeter seal structure 300 in this embodiment is prepared from a sealing adhesive, and the sealing adhesive may include, but is not limited to, at least one of a thermosetting adhesive or a photocurable adhesive; the thermosetting adhesive may include, but is not limited to, epoxy resins, and the photocurable adhesive may include, but is not limited to, UV-curable adhesives; for example, the sealing adhesive of the present application may be a UV-thermosetting adhesive produced by Sekisui Chemical Co., Ltd.

In a practicable embodiment, the material for preparing the support structure layer 600 may include, but is not limited to, resins, glass fibers, or inorganic materials; the resins may include, but are not limited to, polystyrene, and the inorganic materials may include, but are not limited to, silicon dioxide.

In a practicable embodiment, the material for preparing the fixed layer may include, but is not limited to, thermosetting adhesives, photocurable adhesives, or photoresists; wherein: the thermosetting adhesives may include, but are not limited to, silicone resins or epoxy resins, and the photocurable adhesives may include, but are not limited to, acrylic resins.

In this embodiment, the preparation processes of the first fixed layer 501 and the support structure layer 600 are as follows:
1) Preparation of the first fixed layer 501: In this embodiment, the material for preparing the first fixed layer 501 is a thermosetting adhesive, and the coating method is screen printing. First, the first fixed layer solution (thermosetting adhesive) is added to the feeding system of the printing machine. By adjusting the feeding pressure, feeding needle movement speed, spacing between the transfer roller and the scraper, and the distance between the printing plate and the substrate, the transfer volume of the polyimide (PI) solution is controlled to obtain a coated film with varying thicknesses. Taking an APR printing machine (Model: SFT-P100 screen printer) as an example, specific parameters for preparing the first fixed layer 501 are provided, wherein: the side A indentation of the printer is 0-2 mm, side B indentation is 0-2 mm, droplet pressure is 0.05-0.5 kPa, D/A roller speed is 10-200 rpm, drum speed is 5-100 rpm, pre-baking temperature is 50-110°C, and pre-baking time is 1-20 minutes. Through these parameter adjustments, a uniform-thickness coating is formed on the first transparent conductive layer 201. Subsequently, the first transparent conductive substrate is transferred to an oven for low-temperature pre-baking, with the baking duration determined by the specific material and the solid content of the first fixed layer. After pre-baking, the first transparent conductive substrate with the first fixed layer 501 is obtained.
2) Preparation of the support structure layer 600: In this embodiment, the support structure layer 600 is prepared using a wet-spray method. First, spacers and a wet-spray solvent are mixed in a predetermined ratio to form a homogeneous dispersion, which is then added to the feeding system of the spray-coating equipment. The equipment is heated, and continuous stirring and cyclic feeding are initiated. After setting the spray duration and settling time, and once the chamber temperature reaches the target value, the first transparent conductive substrate with the first fixed layer 501 is placed into the chamber for spraying. Upon completion, the substrate is transferred to an oven for high-temperature curing to form the support structure layer 600, with a spacer distribution density of 1-200 particles/mm². Key parameters include: spacer-to-solvent mass ratio of 1:1000-1:10, wet-spray temperature of 30-100°C, spray pressure of 1.0-5.0 MPa, spray duration of 1-60 seconds, settling time of 1-60 seconds, main curing temperature of 110-250°C, and main curing duration of 20-90 minutes.

The feeding system must adopt continuous stirring and cyclic feeding to ensure uniform spraying of spacers and the wet-spray solvent, thereby facilitating homogeneous distribution of the spacers. The purpose of heating the equipment is to enable partial volatilization of the wet-spray solvent after spraying, with the temperature range determined by the volatilization characteristics of the wet-spray solvent. The density of the sprayed particles can be controlled by adjusting the spray duration and settling time. The wet-spray solvent must be selected from low-boiling-point, easily volatilized solvents that leave no residue after volatilization and do not affect the performance of the fixed layer; preferably, the wet-spray solvent may include, but is not limited to, at least one of ethanol, isopropanol, acetone, N-methylpyrrolidone (NMP), toluene, ethyl acetate, or propylene glycol monomethyl ether acetate (PGMEA); more preferably, the wet-spray solvent is propylene glycol monomethyl ether acetate (PGMEA).

The preparation of the support structure layer 600 is not limited to the aforementioned method and may alternatively employ the following coating process: spacers and an adhesive (e.g., thermosetting adhesive, UV-curable adhesive, etc.) are mixed in a predetermined ratio, and a homogeneous dispersion of the spacers is formed via stirring or ultrasonic dispersion; a predetermined amount of the mixed solution is dispensed onto the surface of the first transparent conductive substrate with the first fixed layer 501, and spin coating is performed by adjusting the rotation rate and duration to uniformly coat the mixed solution onto the substrate surface; the support structure layer 600 is then formed through heating or UV curing.

### Embodiment 2

Referring to the structural schematic diagram in FIG. 2, the similarities between this embodiment and Embodiment 1 will not be reiterated, and the differences lie in that this embodiment further comprises a second fixed layer 502 formed on and covering the entire second transparent conductive layer 202.

### Embodiment 3

Referring to the structural schematic diagram in FIG. 3, the similarities between this embodiment and Embodiment 1 will not be reiterated, and the differences lie in that this embodiment further comprises a first alignment layer 701 formed on the first fixed layer 501; the first alignment layer 701 provides an initial alignment angle for the light modulation material 400 to achieve rapid response along a predetermined direction after driving while facilitating a more stable arrangement of the light modulation material 400; in this embodiment, the formation steps of the first alignment layer 701 include: obtaining a predetermined concentration of an alignment agent solution, coating the alignment agent solution onto the surface of the first transparent conductive substrate with the first fixed layer 501, curing to form the first alignment layer 701, and finally aligning the cured first alignment layer 701; wherein the alignment agent may include, but is not limited to, organic polymer materials such as polyvinyl butyral (PVB), siloxane, polyimide, and the like; the coating method may include, but is not limited to, spin coating, dip coating, screen printing, spray coating, or slot die coating; the first alignment layer 701 includes types such as substantially planar alignment and substantially vertical alignment; the alignment method may include, but is not limited to, rubbing alignment, photoalignment, oblique evaporation alignment, or Langmuir-Blodgett (LB) film alignment.

### Embodiment 4

Referring to the structural schematic diagram in FIG. 4, the similarities between this embodiment and Embodiment 1 will not be reiterated, and the differences lie in that this embodiment further comprises a second alignment layer 702 formed on and covering the entire second transparent conductive layer 202; the preparation method of the second alignment layer 702 may refer to the formation steps of the first alignment layer 701 in Embodiment 3, with the difference that the alignment agent solution is directly coated onto the surface of the second transparent conductive layer 202.

### Embodiment 5

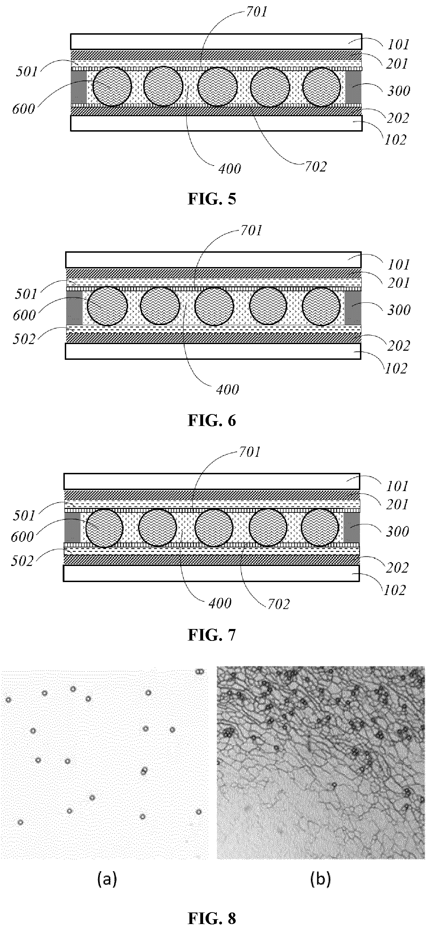

Referring to the structural schematic diagram in FIG. 5, the similarities between this embodiment and Embodiment 1 will not be reiterated, and the differences lie in that this embodiment further comprises a first alignment layer 701 formed on the first fixed layer 501 and a second alignment layer 702 formed on and covering the entire second transparent conductive layer 202; the preparation of the first alignment layer 701 may refer to Embodiment 3, and the preparation of the second alignment layer 702 may refer to Embodiment 4.

### Embodiment 6

Referring to the structural schematic diagram in FIG. 6, the similarities between this embodiment and Embodiment 1 will not be reiterated, and the differences lie in that this embodiment further comprises a second fixed layer 502 formed on and covering the entire second transparent conductive layer 202 and a first alignment layer 701 formed on the first fixed layer 501; the preparation method of the second fixed layer 502 refers to Embodiment 1, and the preparation method of the first alignment layer 701 refers to Embodiment 3, which will not be reiterated here.

### Embodiment 7

Referring to the structural schematic diagram in FIG. 7, the similarities between this embodiment and Embodiment 1 will not be reiterated, and the differences lie in that this embodiment further comprises a first alignment layer 701 formed on the first fixed layer 501 and a second fixed layer 502 and a second alignment layer 702 sequentially formed on and covering the entire second transparent conductive layer 202; the preparation methods of the first alignment layer 701 and the second alignment layer 702 refer to Embodiment 3 and will not be reiterated here.

The present application conducted a comparative analysis of the optical performance between the light modulation device employing the technical solution of Embodiment 1 and those prepared by the spacer fixation method and PS technology; across all technical solutions, except for the fixation method of the support structure layer 600, other materials and process steps were consistent, and the light modulation material 400 used in Embodiment 1 was a suspended particle light modulation material, with optical performance data for each light modulation device provided in Table 1.1.

**Table 1.1 Optical Performance Data of Various Light modulation Devices**

| No | Technical Solution | Bright State | | Dark state | |
|---|---|---|---|---|---|
| | | Transmittance /% | Haze /% | Transmittance /% | Haze /% |
| 1 | Spacer Fixation Method | 75.1 | 2.25 | 4.93 | 23.57 |
| 2 | PS Technology Method | 75.9 | 2.84 | 5.17 | 24.16 |
| 3 | Technical Solution of Embodiment 1 of the Present Application | 75.2 | 2.39 | 4.52 | 24.52 |

Through comparison, the optical performance of the light modulation device prepared according to the technical solution of the present application is closest to that of the light modulation device prepared by the spacer fixation method and superior to that of the light modulation device prepared by PS technology.

Further, the fixed effect of the support structure layer 600 of the light modulation device of Embodiment 1 and those prepared by two spacer fixation methods was tested using a high-pressure gas purge method, wherein: the gas pressure was set to 1.0 kgf/cm², 2.0 kgf/cm², and 3.0 kgf/cm² respectively; the gas nozzle diameter was 2.0 mm; the gas purge distance was 30 mm; and the purge duration was 15 seconds; a comparative analysis of the fixed effect was performed by measuring the residual spacer count before and after the purge, with specific residual rates detailed in Table 1.2.

**Table 1.2 Fixation Effect Test of Support Structure Layer**

| No | Residual Rate (%) | Air Pressure(kgf/cm²) | | | Heating Conditions |
|---|---|---|---|---|---|
| | | 1.0 | 2.0 | 3.0 | |
| 1 | Non-adhesive Spacer Fixation Method | 12% | 0% | 0% | 120°Cx30min |
| 2 | Adhesive Spacer Fixation Method | 100% | 100% | 94% | 120°Cx30min |
| 3 | Technical Solution of Embodiment 1 of the Present Application | 100% | 100% | 100% | 120°Cx30min |

Through analysis, the fixation effect of the support structure layer 600 of the light modulation device prepared by the technical solution of Embodiment 1 of the present application is superior to that of the light modulation device prepared by the spacer fixation technical solution.

The present application conducted a lamination test comparison between the suspension-type light modulation device prepared using the technical solution of Embodiment 1 and a suspension-type light modulation device prepared using a conventional method, aiming to verify the cell thickness variation and performance stability of the light modulation devices after external force application. The test procedure is as follows:
The verification employed a laminator for glass lamination testing, wherein the light modulation devices were subjected to an external force of 1 kgf and maintained at a high temperature of 125-140°C for 40-90 minutes, followed by a driving test to observe overall device performance; the internal microscopic images of the light modulation devices prepared using the technical solution of Embodiment 1 of the present application (a) and the conventional method (b) after post-processing are shown in FIG. 8.

As shown in the experimental results of FIG. 8, the suspension-type light modulation device prepared by the conventional method exhibits regional cell thickness anomalies and significant displacement/misalignment of support structures in abnormal regions after undergoing high-temperature and high-pressure processes; in contrast, the suspension-type light modulation device prepared by the technical solution of the present invention demonstrates uniform driving performance and normal functionality.

Concurrently, a withstand voltage test was performed on the light modulation devices; the bistable light modulation device prepared by the conventional method (cell thickness: 10 µm) exhibited a maximum withstand voltage of 100 V, whereas the bistable light modulation device prepared by the technical solution of the present invention achieved a maximum withstand voltage of 240 V, thereby effectively preventing electrical breakdown during practical pressurized driving processes, improving product yield, and ensuring performance stability.

To accommodate diverse dimensional support requirements, the same technical solution was applied to prepare support structure layers 600 of varying sizes, and their fixation effects were tested via the high-pressure gas purge method, wherein: the gas pressure was set to 1.0 kgf/cm², 2.0 kgf/cm², and 3.0 kgf/cm²; the gas nozzle diameter was 2.0 mm; the purge distance was 30 mm; and the purge duration was 15 seconds; the fixation effect was compared by measuring residual spacer counts before and after purging, with specific residual rates detailed in Table 1.3. The data indicates consistent fixation performance across different support heights, validating applicability to multi-dimensional requirements.

**Table 1.3 Fixation Effect Test of Spacer**

| No | Support Structure Layer Height (µm) | Air Pressure(kgf/cm²) | | | Heating conditions |
|---|---|---|---|---|---|
| | | 1 | 2 | 3 | |
| 1 | 2 | 100% | 100% | 100% | 120°Cx30min |
| 2 | 5 | 100% | 100% | 100% | 120°Cx30min |
| 3 | 10 | 100% | 100% | 100% | 120°Cx30min |
| 4 | 15 | 100% | 100% | 100% | 120°Cx30min |
| 5 | 20 | 100% | 100% | 100% | 120°Cx30min |
| 6 | 30 | 100% | 100% | 100% | 120°Cx30min |
| 7 | 50 | 100% | 100% | 100% | 120°Cx30min |
| 8 | 100 | 100% | 100% | 100% | 120°Cx30min |
| 9 | 200 | 100% | 100% | 100% | 120°Cx30min |
| 10 | 500 | 100% | 100% | 100% | 120°Cx30min |

In summary, the present application provides a novel method for preparing a light modulation device, which employs a dedicated fixed layer to immobilize the support structure layer 600, featuring a simple and effective process that concurrently fulfills support and insulation functions, and is applicable to the preparation of products with high cell thickness and large dimensions, demonstrating broad technical applicability.

Although this specification describes the invention through embodiments, each embodiment is not limited to a single independent technical solution; such a narrative manner is adopted solely for clarity, and those skilled in the art shall interpret the specification as a whole, with the technical solutions across embodiments being combinable to form other implementations understandable to a person skilled in the art.

The detailed descriptions above are specific explanations of feasible implementations of the present invention and are not intended to limit its scope of protection; all equivalent implementations or modifications made without departing from the inventive spirit of the present invention shall fall within the scope of protection defined herein.

## Claims

1. A light modulation device, **characterized in that**, comprising:
two transparent conductive substrates, the transparent conductive substrates arranged in parallel and opposing positions;
a perimeter seal structure, the perimeter seal structure sandwiched between the two transparent conductive substrates, such that the two transparent conductive substrates and the perimeter seal structure collectively form an enclosed cavity;
a light modulation material, the light modulation material disposed within the enclosed cavity;
a support structure layer, the support structure layer embedded in the light modulation material layer and configured to maintain a uniform gap between the two transparent conductive substrates;
a fixed layer, the fixed layer disposed on and covering an entire conductive surface of at least one of the transparent conductive substrates, configured to immobilize the support structure layer.

2. The light modulation device according to claim 1, **characterized in that**, the ratio of a height of the support structure layer to a thickness of the fixed layer is 2:1 to 500,000:1.

3. The light modulation device according to claim 2, **characterized in that**, the thickness of the fixed layer is 0.1 nm to 20 µm.

4. The light modulation device according to claim 2, **characterized in that**, the height of the support structure layer is 1 µm to 500 µm.

5. The light modulation device according to claim 4, **characterized in that**, the support structure layer comprises spacers, and a shape of the spacers is at least one of spherical, rod-shaped, elliptical, or flake-shaped.

6. The light modulation device according to claim 4, **characterized in that**, the spacers are adhesive spacers or non-adhesive spacers types.

7. The light modulation device according to claim 5 or 6, **characterized in that**, a color of the spacers is at least one of transparent, translucent, white, or black.

8. The light modulation device according to claim 5 or 6, **characterized in that**, a distribution density of the spacers is 1 particle/mm² to 200 particles/mm².

9. The light modulation device according to claim 1, **characterized in that**, the light modulation device further comprises an alignment layer.

10. The light modulation device according to claim 9, **characterized in that**, the alignment layer is disposed adjacent to the fixed layer.

11. The light modulation device according to claim 9, **characterized in that**, the alignment layer is disposed adjacent to the conductive surface of the transparent conductive substrate.

12. The light modulation device according to claim 9, **characterized in that**, the alignment layer is disposed adjacent to the fixed layer and/or the conductive surface of the transparent conductive substrate.

13. A preparation method for the light modulation device according to any one of claims 1-12, **characterized in that**, comprising the following steps:
S1. preparing transparent conductive substrates: performing surface treatment on the transparent conductive substrates;
S2. forming a fixed layer: first, uniformly coating a fixed layer solution onto a conductive surface of the transparent conductive substrate obtained in S1; second, pre-baking to obtain a transparent conductive substrate with the fixed layer;
S3. forming a support structure layer: first, mixing spacers and a wet-spray solvent in a predetermined ratio to form a homogeneous dispersion of the spacers; second, uniformly spraying the mixture onto the fixed layer of the transparent conductive substrate with the fixed layer obtained in S2 using spray-coating equipment; third, performing high-temperature curing to obtain a transparent conductive substrate with the support structure layer;
S4. assembling a cell: bonding two aligned transparent conductive substrates using a sealing adhesive, followed by curing to form the cell, wherein at least one of the two transparent conductive substrates is the transparent conductive substrate with the support structure layer obtained in S3;
S5. filling the cell from S4 with a light modulation material, followed by curing and sealing to obtain the light modulation device.

14. The method according to claim 13, **characterized in that**, the fixed layer solution is a thermosetting adhesive, a photocurable adhesive, or a photo-thermosetting adhesive.

15. The method according to claim 14, **characterized in that**, the thermosetting adhesive is selected from any one of silicone resins , epoxy resins, the photocurable adhesive is selected from acrylic resins, and the photo-thermosetting adhesive is a mixture of a silicone resin and an acrylic resin or a mixture of an epoxy resin and an acrylic resin.

16. The method according to claim 13, **characterized in that**, the coating method is selected from any one of spin coating, dip coating, screen printing, spray coating, slot die coating.
